# EUROPEAN PATENT SPECIFICATION

(11) **EP 3 936 665 B1**
(45) Date of publication and mention of the grant of the patent: **04.01.2023**
(21) Application number: 20185337.1
(22) Date of filing: 10.07.2020
(51) Int. Cl.: E01C 13/08

(54) **COMPOSTABLE ARTIFICIAL TURF INFILL**
KOMPOSTIERBARE KUNSTRASENFÜLLUNG
REMPLISSAGE DE GAZON ARTIFICIEL COMPOSTABLE

(43) Date of publication of application: 12.01.2022
(73) Proprietor: Melos GmbH, 49324 Melle (DE)
(72) Inventor: Seifert, Sascha, 32257 Bünde (DE); Placke, Melina, 49134 Wallenhorst (DE)
(74) Representative: Richardt Patentanwälte PartG mbB

(56) References cited:
- WO-A1-2016/190744
- WO-A1-2016/205087
- US-B1- 10 059 836

## Description

### Field of the invention

The invention relates to a compostable artificial turf infill for an artificial turf and an artificial turf with a compostable artificial turf infill.

### Background and related art

Artificial turf or artificial grass is surface that is made up of fibers that is used to replace grass. The structure of the artificial turf is designed such that the artificial turf has an appearance which resembles grass. Typically artificial turf is used as a surface for sports such as soccer, American football, rugby, tennis, golf, for playing fields, or exercise fields. Furthermore artificial turf is frequently used for landscaping applications.

Artificial turf may be manufactured using techniques for manufacturing carpets. For example, artificial turf fibers that have the appearance of grass blades may be tufted or attached to a backing. Often times artificial turf infill is placed between the artificial turf fibers.

Artificial turf infill is a granular material that covers the bottom portion of the artificial turf fibers. The use of artificial turf infill may have a number of advantages. For example, artificial turf infill may help the artificial turf fibers stand up straight. Artificial turf infill may also absorb impact from walking or running and provide an experience similar to being on real turf. The artificial turf infill may also help to keep the artificial turf carpet flat and in place by weighting it down. Particular reference is made to document WO2016/205087 A1 that discloses an infill material comprising a polymer, cellulosic fibers, a filler material and optionally additives.

Even though the artificial turf infills known from the art are constantly being further developed, rubber granulate or recycled (e.g., from car tires) rubber granulate has been used most commonly as artificial turf infill. The most commonly used rubbers are styrene-butadiene rubber (SBR) and ethylene propylene diene monomer (EPDM), both of which can be generated from recycled rubber (post-consumer waste or post-industrial waste) or virgin material. Recycled rubbers are cost-effective as they are derived from existing products that have reached the end of their service life. Even though recycling of, e.g., used car tires to make artificial turf infill particles has an environmentally friendly aspect, concerns have arisen lately about the potential health effects of substances released by the granulate in synthetic turf sports fields with vulcanized (either by peroxide or sulfur vulcanization) recycled rubber infill. Another negative side effect of the use of rubber as artificial turf infill is that in the hot season, when the outside surfaces are subjected to severe heat, rubber-based artificial turf infill materials tend to heat to 20-40° C above the ambient temperature. As a result, the artificial turf is perceived as unpleasantly hot by the player.

Further, concerns have arisen lately as artificial turf infill from artificial grass playing fields can be released by means of wind and rain, through general maintenance, rubbish disposal, surface water drains and players' clothing. The concern is that the escaped hitherto used artificial turf infill granulate, which is very resistant to normal environmental degradation, and which will lead to it being present in the environment for a long time after its initial release, affects soil, waterways and ultimately the ocean. Thus, the hitherto used artificial turf infill granulate may be considered as microplastics pollution. Microplastics are defined as very small (typically smaller than 5mm) solid particles composed of mixtures of polymers (the primary components of plastics) and functional additives. They may also contain residual impurities from when they were manufactured. In the EU/EAA it is estimated that up to 16 000 tonnes of infill material used in artificial turfs may be released per year (https://echa.europa.eu/de/hot-topics/microplastics).

It is therefore the purpose of the invention to provide an improved turf infill material which is environmentally friendly.

### Summary

The invention provides for an artificial turf infill, a method of manufacturing an artificial turf infill, an artificial turf, and a method for manufacturing an artificial turf in the independent claims. Embodiments are given in the dependent claims. Embodiments and examples described herein can freely be combined if they are not mutually exclusive.

In one aspect the invention provides for an artificial turf infill according to claim 1.

In a beneficial aspect, the granules are made from unfoamed material, meaning no gas bubbles are intentionally trapped in pockets. It is further envisioned that the granules are devoid of any blowing agent, which might be environmentally unfriendly. By avoiding the use of any blowing agent during the manufacture of the artificial turf infill, the material density of the granules components comprised in the artificial turf infill, here at least one compostable polymer, a filler material and an oil, may thus be at least 0.8 g/cm³. As the density of the granules may be at least 0.8 g/cm³, the artificial turf infill may not easily be blown away under windy conditions. It is further conceivable that the density of the granules may be higher than 1.0 g/cm³, making it even more difficult for the granules to escape due to wind or rain.

As the turf infill comprises a compostable, in particular biodegradable, polymer selected from the group consisting of polylactic acid (PLA), thermoplastic copolyester elastomer (TPC), polybutylene succinate (PBS), poly(3-hydroxybutyrate-co-3-hydroxyvalerate) (PHBV), polyhydroxybutyrate (PHB), polyhydroxyalkanoate (PHA), a derivative thereof or a mixture (blend) thereof, a filler material (obtained from natural sources) and an (biodegradable) oil, the artificial turf infill is fully compostable.

It is within the scope of the invention that the artificial turf infill conforms with the strict criteria of the European norm DIN EN 13432 on industrial compostability. Artificial turf infills have an expected lifetime of about of 10-15 years, after which the infill material show signs of material fatigue due to constant mechanical stress and chemical/environmental impact. Furthermore, the infill may lose their color and may bleach. Thus, as the granules are made of compostable materials, the artificial turf infill of the invention can be composted after its service life. It is thus conceivable that the used infill may be transported from the place of use and decomposed in an industrial composting plant, where conditions (e.g. temperature, humidity, aeration) are controlled. Microbes, like bacteria or fungi and their enzymes, are able to "digest" the chain structure of compostable polymers as a source of nutrition. The resulting end products are water, carbon dioxide (CO₂) and biomass. Hereby, the speed of biodegradation depends on the temperature (usually 58°C +/- 2°C composting process), humidity (water is required for the process), and the number and types of microbes. In industrial composting facilities, all those requirements are controlled and thus the artificial turf infill may be converted into CO₂, water and biomass, usually within 12 to 16 weeks.

In a further beneficial aspect, the artificial turf infill further comprises filler material. The filler material is homogeneously distributed in the granule. The use of filler material, in particular filler material from natural sources, such as e.g. barium sulfate, calcium carbonate, china clay, talc, aluminosilicate, and combinations thereof, can be advantageous, as the filler material particles are able to increase the overall material density of the granules. Thus, as the weight of the granules (granulate) increases, the risk of granules floating away during heavy rainfall or being blown away by strong wind is further reduced. According to some embodiments, the granules of the artificial turf infill have a density, in particular material density, of at least 1.0 g/cm³. According to some embodiments, it may be further beneficial that the granules may comprise up to 50 wt.% of filler material. Further, according so some embodiments, it may be beneficial that the filler material has a density of at least 2.0 g/cm³ and comprises any one of the following: barium sulfate, calcium carbonate, china clay, talc, aluminosilicate, and combinations thereof.

In a beneficial aspect, the granules of the artificial turf infill comprise elastic properties. Applicant has observed that the granules are elastic, as the combination of the compostable polymer selected from the group consisting of polylactic acid (PLA), thermoplastic copolyester elastomer (TPC), polybutylene succinate (PBS), poly(3-hydroxybutyrate-co-3-hydroxyvalerate) (PHBV), polyhydroxybutyrate (PHB), polyhydroxyalkanoate (PHA), a derivative thereof or a mixture or a blend thereof, with the filler material and the oil showed stretching of polymer chains when forces were applied. Further, in a beneficial aspect, the granules of the artificial turf infill showed compression resilient properties and viscoelastic properties.

In a further beneficial aspect, the artificial turf infill further comprises an oil. The oil is mixed with the polymer and filler material during the manufacture of the granules and is therefore homogeneously distributed in the granules. The oil serves as a plasticizer, thereby making the granules softer and further increasing their elasticity. The presence of the oil may therefore increase the robustness of the infill granules against abrasion and against damages induced by multiple freeze-thaw-cycles: if inelastic filling material is pressed by water which expands its volume in a freezing process against another inelastic infill material, the infill material will be damaged. Thus, the presence of the oil may protect the infill granules from this effect.

The oil may be a biodegradable oil. Further, the oil may comprise an unsaturated ester, in particular an unsaturated synthetic ester. As the ester is unsaturated, the ester is enzymatically vulnerable and thus biodegradable. Further, the oil may be made from renewable resources. Suitable carbon sources for the oil made of renewable sources may be a manufacturing process or any other natural or man-made material or process that can be used to produce the desired substance. The oil may be made of renewable resources, such as for example glycerol, fatty acids and esterification from fats. Any kind of carbon source that is used for producing a material whose ¹⁴C atom content is similar or basically identical to the ¹⁴C content of biomass of recently living organisms is referred to as renewable carbon source. Atmospheric CO₂ is the source of radioactive carbon C14. Fossil (petro-based) carbon sources comprise a lower amount of radioactive C14 isotopes and thus can be discerned from renewable (bio-based) carbon sources by performing an isotope analysis (radiocarbon dating). Roughly half of all ¹⁴C atoms decay after 5700 years.

For the artificial turf infill according to the invention
- the compostable polymer comprises 25% to 50% of the artificial turf infill by weight, in particular between 34% and 46%,
- the filler material comprises 30% to 50% of the artificial turf infill by weight, in particular between 40% and 49.7%, and
- the oil comprises 1% to 9% of the artificial turf infill by weight, in particular between 2.5% and 8%.

Applicant has observed that these compositions of the individual components (compostable polymer, filler material and oil) in the weight percentage ranges shown proved to be very promising. The granules manufactured with the described weight percent ranges of the components showed a tensile strength between 0.2 MPa and 11.0 MPa, an elongation at break between 0.1% and 70%, a surface hardness of smaller than Shore A 98 or smaller than Shore D 55 and a density between 1.2 g/cm³ and 1.8 g/cm³.

According to some embodiments, the natural fibers are selected from the group consisting of burlap fibers, jute fibers, cotton fibers wool fibers, hemp fibers, flax fibers, kenaf fibers, nettle fibers, sisal fibers, coconut fibers, walnut fibers and combinations thereof.

It is envisioned that the natural fibers are homogeneously distributed in the granule. The use of natural fibers has several beneficial aspects. The natural fibers have a relatively high specific heat in comparison to other materials which are commonly used for artificial turf infill. If the artificial turf is exposed to warm air or to sunlight the use of the natural fibers may help to reduce heating of the artificial turf and the artificial turf infill overall. This may make for a safer and more pleasant playing surface. Another potential advantage is that the natural fibers have a high water absorbance and therefore the capacity to hold large amounts of water. Before a game is played on the artificial turf it may be possible to spray or sprinkle water onto the artificial turf. During the period of the game water, which is contained in the natural fiber, may slowly evaporate helping to keep the entire artificial turf surface cool during a game. Another potential advantage is that the natural fiber may reduce the cost of the artificial turf infill. Natural fibers are a suitable infill material and can be used to reduce the amount of the polymer that is used. Further, applicant has observed that the presence of natural fibers further increases the elasticity and the compression resilient properties of the granules.

According to some embodiments, the natural fibers are at least partially embedded in the granules of the artificial turf infill. For this, the granules of the artificial turf infill may comprise a polymer portion. The polymer portion may comprise the compostable polymer, the filler material, and the oil. The natural fibers are at least partially embedded in the polymer portion.

Having the natural fibers embedded within the (polymer portion of) the granule may have the advantage that the natural fibers do not become unmixed with the rest of the artificial turf infill. For example if natural fibers and the polymer portion were mixed loosely together over a period of time and being exposed to rain and water, for example, the natural fiber (being less dense) may have a tendency to go on top of the polymer portion and separate out. Having the natural fiber at least partially embedded in the polymer portion may prevent this.

As disclosed above, the natural fibers are at least partially embedded in the granules. The fiber being only partially embedded in the granule can be effectively divided into two portions in the longitudinal direction of the fiber, wherein one portion of the fiber is embedded in the granule and another portion of the fiber is not embedded in the granule. In other words the other portion protrudes from the granule. As it is customary in the industry, the other portion protruding from the granule is called a dangling end. At least some of the portions protruding from the granules can be longer than their respective portions embedded in the granules. It is also conceivable that the fiber is embedded in the granule and portion of the fiber is exposed at the surface of the granule.

Portions of fibers which are not embedded in the granules or exposed at the surface of the granule can facilitate water absorption, because they are fully exposed to water or moisture. Water absorbed by the dangling end of the fiber which is not embedded in the granule or the exposed portion of the fiber can further spread into the rest of the fiber which is embedded in the granule e.g. due to capillary effect. Thus the exposed portions and/or the dangling ends of the fibers can facilitate water absorption. The exposed portion and/or dangling end can further facilitate water evaporation from the fiber as well because an entire surface of the exposed portion and/or dangling end is exposed to air. Moreover the embedded portion of the fiber can serve as a water reservoir for the exposed portion and/or dangling end portion of the fiber.

According to some embodiments, it is envisaged in order to increase the total weight of the artificial turf infill that the filler material has a density of at least 2.0 g/cm³ and comprises any one of the following: barium sulfate, calcium carbonate, china clay, talc, aluminosilicate, and combinations thereof. These fillers may be mined from natural deposits.

According to some embodiments, the pigment is an inorganic pigment, selected from the group consisting of iron oxide, chrome oxide, titanium oxide, and combinations thereof.

The inorganic pigments provide a desired color to the artificial turf infill. For example, iron oxide may be used to provide a brown color, chrome oxide may be used to provide a green color and titanium oxides may be used to cover a wide color spectrum (due to foreign ions). These inorganic pigments may further be beneficial due to their relatively low manufacturing costs. Further, the use of the inorganic pigments further provides opacity, which provides UV stability of the granules.

According to some embodiments, the lubricant is selected from the group consisting of stearic acid, sodium glycerine, glycerine, and combinations thereof. Applicant has observed that the use of a lubricant, in particular stearic acid, further increases the softness of the granules and further improved their elasticity. The presence of the lubricant may therefore further increase the robustness of the infill granules against abrasion and against damages induced by multiple freeze-thaw-cycles. Applicant has further observed that the use of the lubricant, in particular stearic acid, reduces or hinders the adhesion of the polymer to the kneader, stirrer or mixer during the manufacture of the granules of the artificial turf infill.

According to the invention, the granules of the artificial turf infill consist of
- 25% to 50% by weight of a compostable polymer, in particular between 34% and 46%,
- 30% to 50% by weight of a filler material, in particular between 40% and 49.7%,
- 1% to 9% by weight of an oil, in particular between 2.5% and 8%,
- 2% to 30% by weight of natural fibers, in particular between 7% and 18%,
- 0.5% to 2.5% by weight of pigments, in particular between 0.8% and 1.3% and
- 0.1% to 0.5% by weight of a lubricant, in particular between 0.2% and 0.3%.

According to an embodiment, the granules of the artificial turf infill may consist of
- 25% to 50% by weight of a mixture of a PLA and a PBS, in particular between 34% and 46%,
- 30% to 50% by weight of chalk, in particular between 40% and 48%,
- 1% to 5% by weight of an oil comprising an unsaturated synthetic ester, in particular between 2.5% and 4.5%,
- 2% to 30% by weight of hemp fibers, in particular between 7% and 18%,
- 0.5% to 2.5% by weight of pigments selected from the group consisting of iron oxide, chrome oxide, titanium oxide, and combinations thereof, in particular between 0.8% and 1.3% and
- 0.1% to 0.5% by weight of stearic acid, in particular between 0.2% and 0.3%.

According to embodiments, a diameter of the granules of the artificial turf infill is between anyone of the following: 0.1 mm and 3.5 mm, 0.3 mm and 3.0 mm, and 0.5 mm and 2.5 mm.

It may be provided here that in each defined diameter range the granules are present with a normal distributed diameter. The normal size distribution of the granules may result in an increase of the bulk density.

According to embodiments, the length of the natural fibers is between any one of the following: 0.05 mm and 4.5 mm, 0.1 mm and 3.5 mm, 0.2 mm and 3.5 mm, and 0.2 mm and 2.5 mm.

The length of a natural fiber may thus be longer than the diameter of the granule in which the fiber is embedded. Hence, the fiber may embedded in the granule in a curved or serpentine form, or one end of the fiber may protrude beyond the surface of the granule.

In another aspect the invention provides for a method of manufacturing an artificial turf infill according to claim 14.

The mixing of the multiple components may be performed by a kneading machine, blending machine or in an extruder. The mixing provides that the multiple components are essentially homogeneously distributed in the master batch.

The method further comprises heating the master batch to form a mouldable mass comprising the multiple components. The heating may take place during or after the mixing of the master batch. The master batch may be heated to temperatures between 100°C and 180°C, in particular between 110°C and 110°C or between 130°C and 155°C.

The method further comprises shaping the master batch into a solid form to provide artificial turf infill. For example, the solid form may be cut, shredded or ground to provide the artificial turf infill. The solid form may be pelletized while leaving the kneading machine, blending machine or the extruder. After the pelletized solid form cools down, the cooled down solid form may be provided as the granule of the artificial turf infill. This granule may be further granulated to provide a desired shape. Alternatively, the solid form may be discharged from the kneading machine, blending machine or the extruder and e.g., shaped as a plate, which is then granulated or shredded. The granulated solid form is then the granule.

According to embodiments, the natural fibers are hemp fibers.

According to embodiments, the method further comprises that the shaping comprises pelletizing the heated master batch.

According to embodiments or after the pelletizing step, the method further comprises that the shaping further comprises granulating the solid form. The granulation of the solid form may comprise grinding, cutting and/or shredding.

In a further aspect, the invention relates to an artificial turf according to claim 18.

In a further aspect, the invention relates to a method of installing an artificial turf according to claim 19.

Artificial turf infill may be used to modify an artificial turf carpet to have more earth like properties. For example the artificial turf infill may provide a surface which is able to absorb impacts in a manner similar to real turf.

### Brief description of the drawings

The following embodiments of the invention are explained in greater detail, by way of example only, making reference to the drawings in which:
- Fig. 1: illustrates a top view of a granule, made from unfoamed material, of an artificial turf infill, not belonging to the invention;
- Fig. 2a: illustrates a top view of a granule of an artificial turf infill, wherein the artificial turf infill further comprises a natural fiber;
- Fig. 2b: illustrates a top view of a granule, made from unfoamed material, of an artificial turf infill, wherein the artificial turf infill further comprises natural fibers;
- Fig. 3: illustrates a cross sectional view of a granule, the granule comprising natural fibers, here hemp fibers;
- Fig. 4: illustrates a cross sectional view of a granule, the granule comprising natural fibers, here hemp fibers;
- Fig. 5: illustrates an example of an artificial turf carpet;
- Fig. 6: illustrates an example of artificial turf;
- Fig. 7: shows a flow chart that illustrates a method of manufacturing artificial turf infill; and
- Fig. 8: shows a flow chart that illustrates a method of manufacturing artificial turf.

### Detailed description of the drawings

Like numbered elements in these figures are either equivalent elements or perform the same function. Elements which have been discussed previously will not necessarily be discussed in later figures if the function is equivalent.

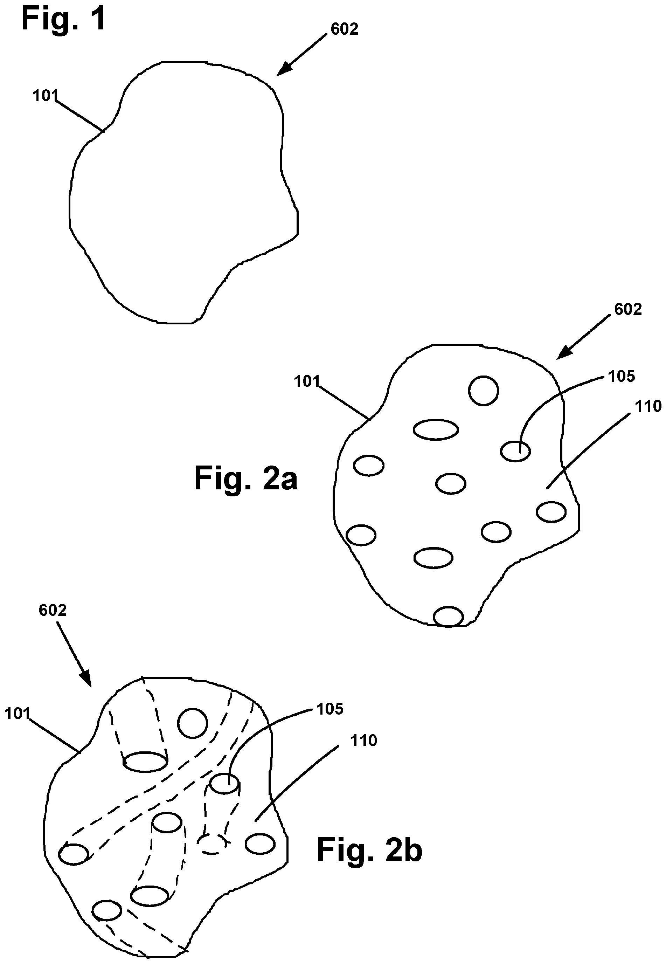

Figs. 1, 2a, 2b, 3-4 illustrate several examples of granules of the artificial turf infill.

**Fig. 1** shows a single artificial turf grain or granule 101 of the artificial turf infill 602. The view shown in Fig. 1 is a top view. The granule 101 could for example be made by providing multiple components and mixing the multiple components to form a homogenous master batch. The multiple components comprise a compostable (biodegradable) polymer, compostable filler material and compostable oil. The compostable polymer may be PLA, TPC, PBS, PHBV, PHB, PHA or derivates thereof. The compostable polymer may further be a blend or a mixture of two or more biodegradable polymers selected from the group consisting of PLA, TPC, PBS, PHBV, PHB and PHA. The compostable filler material may have a density of at least 2.0 g/cm³ and may be barium sulfate, calcium carbonate, china clay, talc, aluminosilicate or combinations thereof. The compostable oil may comprise an unsaturated ester, in particular an unsaturated synthetic ester, and may be made from renewable resources. The mixing may be performed by a kneading machine, blending machine or in an extruder. During or after the mixing of the master batch, which comprises the multiple components, the master batch is heated to form a mouldable mass, which is shaped into a solid form. The solid form may be pelletized while leaving the kneading machine, blending machine or extruder, and after cooling, forms the granule 101. This granule may be further granulated to provide a desired shape. The solid form may also leave the kneading machine, blending machine or extruder and e.g., be shaped as a plate, which is then granulated or shredded. The granulated solid form is then the granule 101. Applicant has observed that for the artificial turf infill for which the compostable polymer comprises 25% to 50% of the artificial turf infill by weight, in particular between 34% and 46%, the filler material comprises 30% to 50% of the artificial turf infill by weight, in particular between 40% and 49.7%, and the oil comprises 1% to 9% of the artificial turf infill by weight, in particular between 2.5% and 8%, and wherein the artificial turf infill does not comprise any natural fiber, the granules manufactured showed a tensile strength between 0.2 MPa and 11.0 MPa, an elongation at break between 0.1% and 70%, a surface hardness of smaller than Shore A 98 or smaller than Shore D 55 and a density between 1.2 g/cm³ and 1.8 g/cm³. The granules were further evaluated using a compression load test (2 MPa (2 N/mm²) for 1 hour at 65°C). Hereby, granules comprising a mixture of a PLA and a PBS, granules comprising a TPC, a mixture of a TPC and a PBS or a mixture of a TPC and a PHB or granules comprising PHB were evaluated with a pressure test score between 2 and 3, whereas the granules comprising PHB resulted in a pressure test score of 4. The pressure test evaluation was carried out according to the rating, as is common in the sector: 1 = plastified; 2 = sticking together; 3 = more compacted; 4 = slightly compacted; 5 = no significant changes to be noticed.

**Fig. 2a** and **Fig. 2b** each show a single artificial turf grain or granule 101 of the artificial turf infill 602, wherein natural fibers 105 are embedded in the granules 101 of the artificial turf infill. The granule 101, as depicted in the Figures 2a and 2b, may comprise the same components as the granule of Fig. 1 with natural fibers as an additional component. The natural fibers may be burlap fibers, jute fibers, cotton fibers, wool fibers, hemp fibers, flax fibers, kenaf fibers, nettle fibers, sisal fibers, coconut fibers, walnut fibers and combinations thereof. The length of the natural fibers is between any one of the following: 0.05 mm and 4.5 mm, 0.1 mm and 3.5 mm, 0.2 mm and 3.5 mm, and 0.2 mm and 2.5 mm. An advantage of using the natural fibers 105 is that the natural fibers do not heat very quickly and help to isolate other components of the artificial turf from being heated. A further advantage of using the natural fibers 105 is that they absorb water. This may help to make the artificial turf surface seem more realistic and softer and may also have the effect of storing water to reduce the temperature of the playing surface. The fibers, which are completely embedded in the polymer portion 110, are not able to absorb water, however the cost of natural fiber is considerably less than the cost of the polymer portion. In the examples, as shown in the top views of Figs. 2a and 2b, the natural fibers are hemp fibers. Fig. 2a illustrates that the granules 101 of the artificial turf infill 602 may comprise a polymer portion 110 and the hemp fibers 105 are embedded in the polymer portion. The polymer portion 110 comprises the compostable polymer, the filler material, and the oil. The polymer portion 110 may further comprise a lubricant and/or pigments. As shown in Figs. 2a and 2b, the hemp fibers are embedded in the polymer portion 110 of the granule 101 and ends of the hemp fibers 105 do not protrude (i.e., dangle) beyond the surface of the granule. A granule having fibers with no dangling ends (i.e., fibers with ends that do not protrude beyond the surface of the granule) is achieved, for example, by granulation during the manufacture of the infill 602. However, as shown in Fig. 2a a portion, here an end, of the fibers may be exposed at the surface of the granule 101. This end portions of the fibers can facilitate water absorption, because they a fully exposed to water or moisture. Water absorbed by the exposed portion of the fibers can further spread into the rest of the fibers, which are embedded in the granule e.g. due to capillary effect. Thus the exposed portions can facilitate water absorption. The exposed portion can further facilitate water evaporation from the fiber as well because an entire surface of the exposed portion is exposed to air. Moreover the embedded portion of the fiber can serve as a water reservoir for the exposed portion of the fiber 105.

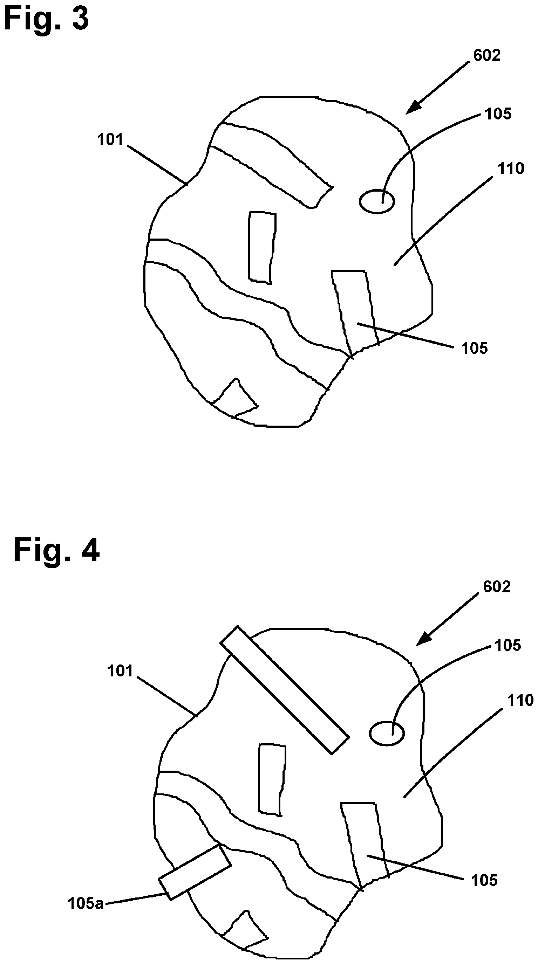

**Fig. 3** shows a cross-sectional view of a single artificial turf grain or granule 101 of the artificial turf infill 602, wherein natural fibers 105 are embedded in the granules 101 of the artificial turf infill. The granule 101, as depicted in Figure 3, may comprise the same components as the granule of Fig. 2a or 2b.

**Fig. 4** shows a cross-sectional view of a single artificial turf grain or granule 101 of the artificial turf infill 602, wherein natural fibers 105 are at least partially embedded in the granules 101 of the artificial turf infill. As shown in Fig. 4, some of the natural fibers, in particular hemp fibers, are fully embedded in the polymer portion 110 of the granule 101, and other fibers are partially embedded in the polymer portion 110 of the granule 101. As depicted in Fig. 4 some of the fibers 105 have dangling ends 105a, i.e., ends that protrude beyond the surface of the granule 101. A granule having fibers with dangling ends (i.e., fibers with ends that protrude beyond the surface of the granule) is achieved, for example, by a pelletizing step during the manufacture of the infill 602. The fibers having dangling ends can facilitate water absorption and evaporation. The dangling end of a fiber can absorb water or moisture in an effective way because an entire surface area (or substantial portion of a surface area) of the dangling end can be in full contact with water or moisture. The same principle is valid for evaporation of water, because an entire surface area (or substantial portion of the surface area) of the dangling end is in contact with air. Moreover the embedded portions of the fibers having dangling ends can act as reservoirs of water, e.g. due to capillary effect.

The granules shown in **Fig. 2a, 2b****,** **3** and **4** show artificial turf infill for which the compostable polymer comprises 25% to 46% of the artificial turf infill by weight, in particular between 34% and 40%, the filler material comprises 30% to 50% of the artificial turf infill by weight, in particular between 40% and 48%, the oil comprises 1% to 8% of the artificial turf infill by weight, in particular between 2.5% and 4.5%, and the natural fibers comprise 2% to 30% of the artificial turf infill by weight, in particular between 7% and 18%. These manufactured granules showed a tensile strength between 1.2 MPa and 6.0 MPa, an elongation at break between 0.9% and 20%, a surface hardness of smaller than Shore A 98 or smaller than Shore D 55 and a density between 1.2 g/cm³ and 1.6 g/cm³. Hereby, granules comprising a mixture of a PLA and a PBS, granules comprising a TPC, a mixture of a TPC and a PBS or a mixture of a TPC and a PBS or granules comprising a PBS showed a tensile strength between 1.3 MPa and 5.0 MPa, an elongation at break between 2.5% and 12%, a surface hardness of smaller than Shore A 82 and a density between 1.2 g/cm³ and 1.4 g/cm³. Granules comprising PHB showed a tensile strength between 1.6 MPa and 2.5 MPa, an elongation at break between 0.8% and 1.2%, a surface hardness of smaller than Shore D 56 and a density between 1.4 g/cm³ and 1.6 g/cm³. The granules were further evaluated using a compression load test (2 MPa (2 N/mm²) for 1 hour at 65°C). Here, the granules comprising a mixture of a PLA and a PBS and granules comprising PHB resulted in a pressure test score of 4 and the granules comprising a TPC, a mixture of a TPC and a PBS or a mixture of a TPC and a PBS resulted in a pressure test score of 3.

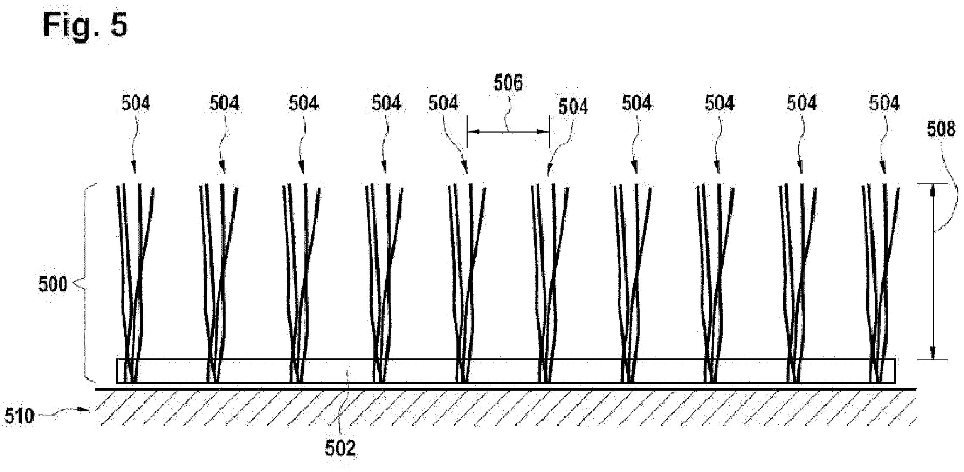

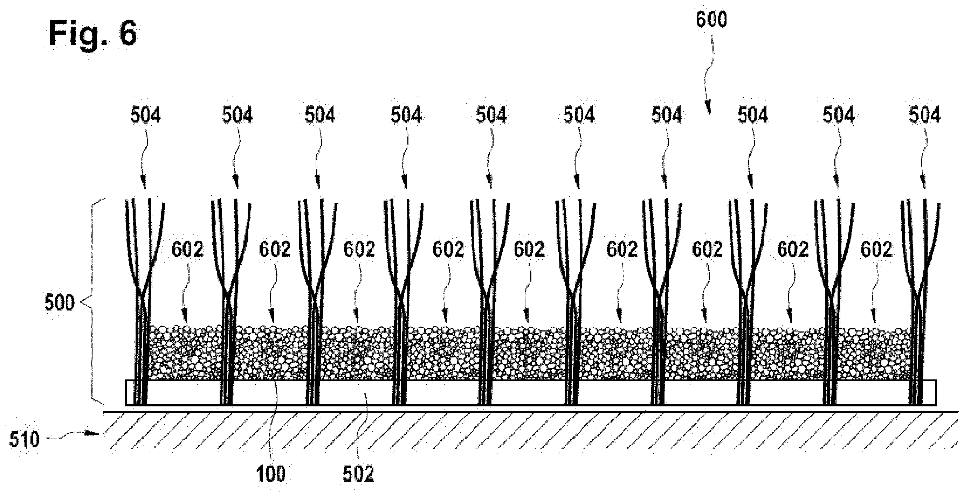

**Figs. 5** and **6** illustrate the manufacture of an artificial turf using an artificial turf carpet and artificial turf infill. In Fig. 5 an artificial turf carpet 500 can be seen. The artificial turf carpet 500 comprises a backing 502. The artificial turf carpet 500 shown in Fig. 5 is a tufted artificial turf carpet in this example. The artificial turf carpet is formed by artificial turf fiber tufts 504 that are tufted into the backing 502. The artificial turf fiber tufts 504 are tufted in rows. There is row spacing 506 between adjacent rows of tufts. The artificial turf fiber tufts 504 also extend a distance above the backing 502. The distance that the fibers 504 extend above the backing 502 is the pile height 508. In Fig. 5 it can be seen that the artificial turf carpet 500 has been installed by placing or attaching it to the ground 510 or a floor. To manufacture the artificial turf, the artificial turf infill made up of grains or granules such as is shown in Figs. 1 to 4 are spread out on the surface and distributed between the artificial turf fiber tufts 504. Fig. 6 shows the artificial turf carpet 500 after the artificial turf infill 602 has been spread out and distributed between the artificial turf fiber tufts 504. It can be seen that the artificial turf infill 602 is a granulate made up of individual grains 100 or granules such as is depicted in Figs. 1 to 4.

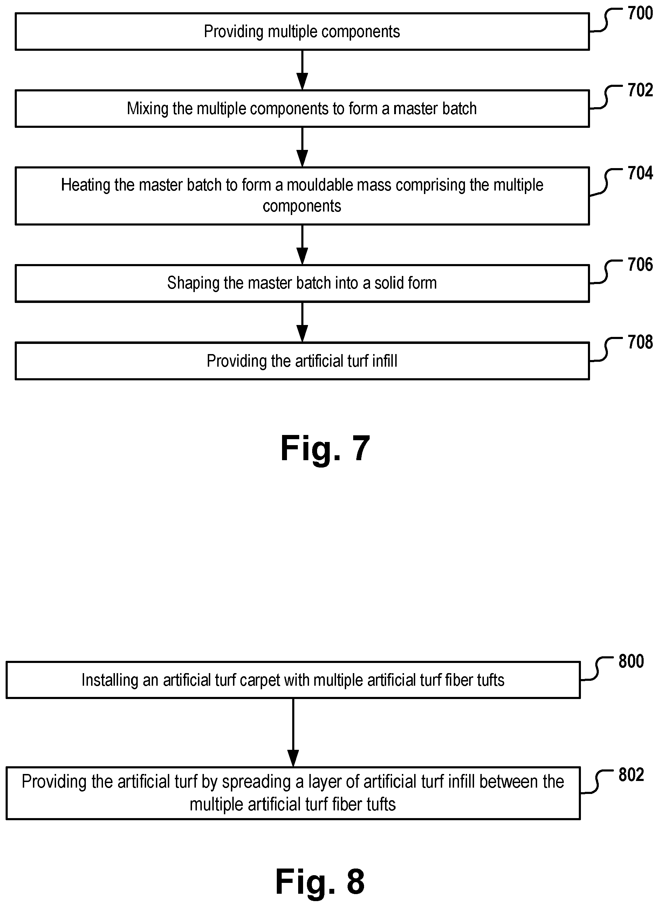

**Fig. 7** shows a flowchart that illustrates a method of manufacturing artificial turf infill 602 such as is depicted in Figs. 1-4. First in step 700 multiple components are provided. The multiple components comprise at least a compostable polymer, filler material and an oil. Next in step 702 the multiple components are mixed to form a master batch. Next in step 704 the master batch is heated to form a mouldable mass comprising the multiple components. Steps 702 and 704 may in some cases be performed at the same time. After the master batch has been mixed and heated the master batch may be formed 706 into a solid form. The solid form may be cut, shredded or ground to provide 708 the artificial turf infill. The artificial turf infill may be then used to manufacture an artificial turf as is illustrated in Fig 8.

**Fig. 8** shows a flowchart, which illustrates a method of manufacturing artificial turf 600 such as depicted in Fig. 6. First in step 800 an artificial turf carpet 500 is installed. The artificial turf carpet comprises multiple artificial turf fiber tufts 504. Next in step 802, the artificial turf 600 is provided by spreading a layer of artificial turf infill 602 between the multiple artificial turf fiber tufts 504. The artificial turf infill 602 comprises the granules 101, as illustrated in one of the Figs. 1 to 4.

### List of reference numerals

- 101: granule
- 105: natural fiber
- 110: polymer portion
- 500: artificial turf carpet
- 502: backing
- 504: artificial turf fiber tufts
- 506: row spacing
- 508: pile height
- 510: ground or floor
- 600: artificial turf
- 602: artificial turf infill
- 700: providing multiple components
- 702: mixing the multiple components to form a master batch
- 704: heating the master batch to form a mouldable mass comprising the multiple components
- 706: shaping the master batch into a solid form
- 708: providing the artificial turf infill
- 800: installing an artificial turf carpet with multiple artificial turf fiber tufts
- 802: providing the artificial turf by spreading a layer of artificial turf infill between the multiple artificial turf fiber tufts

## Claims

1. Artificial turf infill (602) for an artificial turf, wherein the artificial turf infill consists of granules (101), wherein the granules are made from unfoamed material, wherein the granules (101) consist of
- 25% to 50% by weight of a compostable polymer, in particular between 34% and 46%, the compostable polymer being selected from the group consisting of polylactic acid (PLA), thermoplastic copolyester elastomer (TPC), polybutylene succinate (PBS), poly(3-hydroxybutyrate-co-3-hydroxyvalerate) (PHBV), polyhydroxybutyrate (PHB), polyhydroxyalkanoate (PHA), a derivative thereof or a mixture thereof;
- 30% to 50% by weight of a filler material, in particular between 40% and 49.7%;
- 1% to 9% by weight of an oil, in particular between 2.5% and 8%;
- 2% to 30% by weight of natural fibers, in particular between 7% and 18%;
- 0.5% to 2.5% by weight of pigments, in particular between 0.8% and 1.3%; and
- 0.1% to 0.5% by weight of a lubricant, in particular between 0.2% and 0.3%.

2. The artificial turf infill (602) of claim 1, wherein the natural fibers are selected from the group consisting of burlap fibers, jute fibers, cotton fibers, wool fibers, hemp fibers, flax fibers, kenaf fibers, nettle fibers, sisal fibers, coconut fibers, walnut fibers and combinations thereof.

3. The artificial turf infill (602) of claim 1 or claim 2, wherein the natural fibers are hemp fibers.

4. The artificial turf infill (602) of any one of the previous claims, wherein the granules (101) of the artificial turf infill (602) have a density of at least 1.0 g/cm³.

5. The artificial turf infill (602) of any one of the previous claims, wherein the natural fibers (105) are at least partially embedded in the granules (101) of the artificial turf infill.

6. The artificial turf infill (602) of any one of the previous claims, wherein the oil comprises an unsaturated ester, in particular an unsaturated synthetic ester.

7. The artificial turf infill (602) of any one of the previous claims, wherein the oil is made from renewable resources.

8. The artificial turf infill (602) of any one of the previous claims, wherein the filler material has a density of at least 2.0 g/cm³ and comprises any one of the following: barium sulfate, calcium carbonate, china clay, talc, aluminosilicate, and combinations thereof.

9. The artificial turf infill (602) of any one of the previous claims, wherein the pigment is an inorganic pigment, being selected from the group consisting of iron oxide, chrome oxide, titanium oxide, and combinations thereof.

10. The artificial turf infill (602) of any one of the previous claims, wherein the lubricant is selected from the group consisting of stearic acid, sodium glycerine, glycerine, and combinations thereof.

11. The artificial turf infill (602) of claim 1, wherein
- the compostable polymer is a mixture of a PLA and a PBS,
- the natural filler is chalk,
- the oil comprises an unsaturated synthetic ester, wherein the oil comprises 1 % to 5% of the artificial turf infill by weight,
- the natural fibers are hemp fibers,
- the pigments are selected from the group consisting of iron oxide, chrome oxide, titanium oxide, and combinations thereof, and
- the lubricant is stearic acid.

12. The artificial turf infill (602) of any one of the previous claims, wherein a diameter of the granules of the artificial turf infill is between any one of the following: 0.1 mm and 3.5 mm, 0.3 mm and 3.0 mm, and 0.5 mm and 2.5 mm.

13. The artificial turf infill (602) of any one of the previous claims, wherein a length of the natural fibers is between any one of the following: 0.05 mm and 4.5 mm, 0.1 mm and 3.5 mm, 0.2 mm and 3.5 mm, and 0.2 mm and 2.5 mm.

14. A method of manufacturing an artificial turf infill (602), wherein the method comprises:
- mixing (702) multiple components to form a master batch, the master batch consisting of
∘ 25% to 50% by weight of a compostable polymer, in particular between 34% and 46%, the compostable polymer being selected from the group consisting of polylactic acid (PLA), thermoplastic copolyester elastomer (TPC), polybutylene succinate (PBS), poly(3-hydroxybutyrate-co-3-hydroxyvalerate) (PHBV), polyhydroxybutyrate (PHB), polyhydroxyalkanoate (PHA), a derivative thereof or a mixture thereof;
∘ 30% to 50% by weight of a filler material, in particular between 40% and 49.7%;
∘ 1% to 9% by weight of an oil, in particular between 2.5% and 8%;
∘ 2% to 30% by weight of natural fibers, in particular between 7% and 18%;
∘ 0.5% to 2.5% by weight of pigments, in particular between 0.8% and 1.3%; and
∘ 0.1% to 0.5% by weight of a lubricant, in particular between 0.2% and 0.3%;
- heating (704) the master batch to form a mouldable mass comprising the multiple components; and
- shaping (706) the master batch into a solid form to provide artificial turf infill.

15. The method of claim 14, wherein the natural fibers are hemp fibers.

16. The method of any one of claims 14 to 15, wherein the shaping comprises pelletizing the heated master batch.

17. The method of any one of claims 14 to 16, wherein the shaping further comprises granulating the solid form.

18. An artificial turf (600), wherein the artificial turf comprises:
- an artificial turf carpet (500), wherein the artificial turf carpet comprises multiple artificial turf fiber tufts (504); and
- artificial turf infill (602) according to any one of the previous claims 1 - 13, the artificial turf infill being spread between the multiple artificial fiber tufts.

19. A method of installing an artificial turf, wherein the method comprises:
- installing (800) an artificial turf carpet (500), wherein the artificial turf carpet comprises multiple artificial turf fiber tufts (504); and
- providing (802) the artificial turf (600) by spreading a layer of artificial turf infill (602) according to any one of claims 1-13 between the multiple artificial turf fiber tufts (504).

20. Use of the artificial turf infill (602) according to any one of the claims 1-13 as infill for an artificial turf carpet.

21. Use of a granule as an artificial turf infill for an artificial turf carpet, the granule consisting of
- 25% to 50% by weight of a compostable polymer, in particular between 34% and 46%, the compostable polymer being selected from the group consisting of polylactic acid (PLA), thermoplastic copolyester elastomer (TPC), polybutylene succinate (PBS), poly(3-hydroxybutyrate-co-3-hydroxyvalerate) (PHBV), polyhydroxybutyrate (PHB), polyhydroxyalkanoate (PHA), a derivative thereof or a mixture thereof;
- 30% to 50% by weight of a filler material, in particular between 40% and 49.7%;
- 1% to 9% by weight of an oil, in particular between 2.5% and 8%;
- 2% to 30% by weight of natural fibers, in particular between 7% and 18%;
- 0.5% to 2.5% by weight of pigments, in particular between 0.8% and 1.3%; and
- 0.1% to 0.5% by weight of a lubricant, in particular between 0.2% and 0.3%.

## Patentansprüche

1. Kunstrasenfüllung (602) für einen Kunstrasen, wobei die Kunstrasenfüllung aus Granulat (101) besteht, wobei das Granulat aus nicht geschäumtem Material hergestellt ist; dabei besteht das Granulat (101):
- zu 25 bis 50 Gewichtsprozent, insbesondere zwischen 34 % und 46 %, aus einem kompostierbaren Polymer, wobei das kompostierbare Polymer aus der Gruppe ausgewählt ist, die aus Polymilchsäure (PLA), thermoplastischem Copolyester-Elastomer (TPC), Polybutylensuccinat (PBS), Poly(3-hydroxybutyrat-co-3-hydroxyvalerat) (PHBV),Polyhydroxybutyrat (PHB), Polyhydroxyalkanoat (PHA), einem Derivat davon oder einem Gemisch daraus besteht;
- zu 30 bis 50 Gewichtsprozent, insbesondere zwischen 40 % und 49,7 %, aus einem Füllmaterial;
- zu 1 bis 9 Gewichtsprozent, insbesondere zwischen 2,5 % und 8 %, aus einem Öl;
- zu 2 bis 30 Gewichtsprozent, insbesondere zwischen 7 % und 18 %, aus Naturfasern;
- zu 0,5 bis 2,5 Gewichtsprozent, insbesondere zwischen 0,8 % und 1,3 %, aus Pigmenten; und
- zu 0,1 bis 0,5 Gewichtsprozent, insbesondere zwischen 0,2 % und 0,3 %, aus einem Schmiermittel.

2. Kunstrasenfüllung (602) nach Anspruch 1, wobei die Naturfasern aus der Gruppe ausgewählt sind, die aus Sackleinenfasern, Jutefasern, Baumwollfasern, Wollfasern, Hanffasern, Flachsfasern, Kenaffasern, Nesselfasern, Sisalfasern, Kokosnussfasern, Walnussfasern und Kombinationen davon besteht.

3. Kunstrasenfüllung (602) nach Anspruch 1 oder Anspruch 2, wobei die Naturfasern Hanffasern sind.

4. Kunstrasenfüllung (602) nach einem der vorangehenden Ansprüche, wobei das Granulat (101) der Kunstrasenfüllung (602) eine Dichte von mindestens 1,0 g/cm³ aufweist.

5. Kunstrasenfüllung (602) nach einem der vorangehenden Ansprüche, wobei die Naturfasern (105) mindestens teilweise in das Granulat (101) der Kunstrasenfüllung eingebettet sind.

6. Kunstrasenfüllung (602) nach einem der vorangehenden Ansprüche, wobei das Öl einen ungesättigten Ester, insbesondere einen ungesättigten synthetischen Ester, umfasst.

7. Kunstrasenfüllung (602) nach einem der vorangehenden Ansprüche, wobei das Öl aus erneuerbaren Ressourcen hergestellt ist.

8. Kunstrasenfüllung (602) nach einem der vorangehenden Ansprüche, wobei das Füllmaterial eine Dichte von mindestens 2,0 g/cm³ aufweist und ein jegliches von den Folgenden umfasst: Bariumsulfat, Kalziumkarbonat, Kaolin, Talkum, Aluminosilikat und Kombinationen davon.

9. Kunstrasenfüllung (602) nach einem der vorangehenden Ansprüche, wobei das Pigment ein anorganisches Pigment ist, das aus der Gruppe ausgewählt ist, die aus Eisenoxid, Chromoxid, Titanoxid und Kombinationen davon besteht.

10. Kunstrasenfüllung (602) nach einem der vorangehenden Ansprüche, wobei das Schmiermittel aus der Gruppe ausgewählt ist, die aus Stearinsäure, Natriumglycerin, Glycerin und Kombinationen davon besteht.

11. Kunstrasenfüllung (602) nach Anspruch 1, wobei:
- das kompostierbare Polymer ein Gemisch aus einer PLA und einem PBS ist,
- das natürliche Füllmaterial Kalk ist,
- das Öl einen ungesättigten synthetischen Ester umfasst, wobei das Öl zu 1 bis 5 Gewichtsprozent Kunstrasenfüllung umfasst,
- die Naturfasern Hanffasern sind,
- die Pigmente aus der Gruppe ausgewählt sind, die aus Eisenoxid, Chromoxid, Titanoxid und Kombinationen davon besteht, und
- das Schmiermittel Stearinsäure ist.

12. Kunstrasenfüllung (602) nach einem der vorangehenden Ansprüche, wobei ein Durchmesser des Granulats der Kunstrasenfüllung zwischen einem jeglichen der folgenden liegt: 0,1 mm und 3,5 mm, 0,3 mm und 3,0 mm sowie 0,5 mm und 2,5 mm.

13. Kunstrasenfüllung (602) nach einem der vorangehenden Ansprüche, wobei eine Länge der Naturfasern zwischen einer jeglichen der folgenden liegt: 0,05 mm und 4,5 mm, 0,1 mm und 3,5 mm, 0,2 mm und 3,5 mm sowie 0,2 mm und 2,5 mm.

14. Verfahren zum Herstellen einer Kunstrasenfüllung (602), wobei das Verfahren umfasst:
- Mischen (702) mehrerer Komponenten, um eine Grundmischung auszubilden; dabei besteht die Grundmischung:
o zu 25 bis 50 Gewichtsprozent, insbesondere zwischen 34 % und 46 %, aus einem kompostierbaren Polymer, wobei das kompostierbare Polymer aus der Gruppe ausgewählt ist, die aus Polymilchsäure (PLA), thermoplastischem Copolyester-Elastomer (TPC), Polybutylensuccinat (PBS), Poly(3-hydroxybutyrat-co-3-hydroxyvalerat) (PHBV),Polyhydroxybutyrat (PHB), Polyhydroxyalkanoat (PHA), einem Derivat davon oder einem Gemisch daraus besteht;
o zu 30 bis 50 Gewichtsprozent, insbesondere zwischen 40 % und 49,7 %, aus einem Füllmaterial;
o zu 1 bis 9 Gewichtsprozent, insbesondere zwischen 2,5 % und 8 %, aus einem Öl;
o zu 2 bis 30 Gewichtsprozent, insbesondere zwischen 7 % und 18 %, aus Naturfasern;
o zu 0,5 bis 2,5 Gewichtsprozent, insbesondere zwischen 0,8 % und 1,3 %, aus Pigmenten; und
o zu 0,1 bis 0,5 Gewichtsprozent, insbesondere zwischen 0,2 % und 0,3 %, aus einem Schmiermittel;
- Erwärmen (704) der Grundmischung, um eine formbare Masse auszubilden, die die mehreren Komponenten umfasst; und
- Formen (706) der Grundmischung zu einer festen Form, um die Kunstrasenfüllung bereitzustellen.

15. Verfahren nach Anspruch 14, wobei die Naturfasern Hanffasern sind.

16. Verfahren nach einem der Ansprüche 14 bis 15, wobei das Formen ein Pelletisieren der erwärmten Grundmischung umfasst.

17. Verfahren nach einem der Ansprüche 14 bis 16, wobei das Formen ferner ein Granulieren der festen Form umfasst.

18. Kunstrasen (600), wobei der Kunstrasen umfasst:
- einen Kunstrasenteppich (500), wobei der Kunstrasenteppich mehrere Kunstrasenfaserbüschel (504) umfasst; und
- eine Kunstrasenfüllung (602) nach einem der vorangehenden Ansprüche 1-13, wobei die Kunstrasenfüllung zwischen den mehreren Kunstrasenfaserbüscheln verteilt ist.

19. Verfahren zum Installieren eines Kunstrasens, wobei das Verfahren umfasst:
- Installieren (800) eines Kunstrasenteppichs (500), wobei der Kunstrasenteppich mehrere Kunstrasenfaserbüschel (504) umfasst; und
- Bereitstellen (802) des Kunstrasens (600) durch Verteilen einer Schicht von Kunstrasenfüllung (602) nach einem der Ansprüche 1-13 zwischen den mehreren Kunstrasenfaserbüscheln (504).

20. Verwenden der Kunstrasenfüllung (602) nach einem der Ansprüche 1-13 als Füllung für einen Kunstrasenteppich.

21. Verwenden eines Granulats als eine Kunstrasenfüllung für einen Kunstrasenteppich; dabei besteht das Granulat:
- zu 25 bis 50 Gewichtsprozent, insbesondere zwischen 34 % und 46 %, aus einem kompostierbaren Polymer, wobei das kompostierbare Polymer aus der Gruppe ausgewählt ist, die aus Polymilchsäure (PLA), thermoplastischem Copolyester-Elastomer (TPC), Polybutylensuccinat (PBS), Poly(3-hydroxybutyrat-co-3-hydroxyvalerat) (PHBV),Polyhydroxybutyrat (PHB), Polyhydroxyalkanoat (PHA), einem Derivat davon oder einem Gemisch daraus besteht;
- zu 30 bis 50 Gewichtsprozent, insbesondere zwischen 40 % und 49,7 %, aus einem Füllmaterial;
- zu 1 bis 9 Gewichtsprozent, insbesondere zwischen 2,5 % und 8 %, aus einem Öl;
- zu 2 bis 30 Gewichtsprozent, insbesondere zwischen 7 % und 18 %, aus Naturfasern;
- zu 0,5 bis 2,5 Gewichtsprozent, insbesondere zwischen 0,8 % und 1,3 %, aus Pigmenten; und
- zu 0,1 bis 0,5 Gewichtsprozent, insbesondere zwischen 0,2 % und 0,3 %, aus einem Schmiermittel.

## Revendications

1. Remplissage de gazon artificiel (602) destiné à un gazon artificiel, le remplissage de gazon artificiel étant constitué de granulés (101), où les granulés sont fabriqués à partir d'une matière non expansée, où les granulés (101) sont constitués
- de 25 % à 50 % en poids d'un polymère compostable, en particulier, entre 34 % et 46 %, le polymère compostable étant choisi dans le groupe constitué de l'acide poly lactique (PLA), d'un élastomère co-polyester thermoplastique (TPC), de poly butylène succinate (PBS), de poly (3-hydroxy butyrate-co-3-hydroxy valérate) (PHBV), de poly hydroxy butyrate (PHB), de poly hydroxy alcanoate (PHA), d'un dérivé de ceux-ci ou d'un mélange de ceux-ci ;
- de 30 % à 50 % en poids d'une matière de charge, en particulier entre 40 % et 49,7 % ;
- de 1 % à 9 % en poids d'huile, en particulier entre 2,5 % et 8 % ;
- de 2 % à 30 % en poids de fibres naturelles, en particulier entre 7 % et 18 % ;
- de 0,5 % à 2,5 % en poids de pigments, en particulier entre 0,8 % et 1,3 % ; et
- de 0,1 % à 0,5 % en poids de lubrifiant, en particulier entre 0,2 % et 0,3 %.

2. Remplissage de gazon artificiel (602) selon la revendication 1, dans lequel les fibres naturelles sont choisies dans le groupe constitué de fibres de toile à sacs, de fibres de jute, de fibres de coton, de fibres de laine, de fibres de chanvre, de fibres de lin, de fibres de kénaf, de fibres d'ortie, de fibres de sisal, de fibres de noix de coco, de fibres de noix et de combinaisons de celles-ci.

3. Remplissage de gazon artificiel (602) selon la revendication 1 ou la revendication 2, dans lequel les fibres naturelles sont des fibres de chanvre.

4. Remplissage de gazon artificiel (602) selon l'une quelconque des revendications précédentes, dans lequel les granulés (101) du remplissage de gazon artificiel (602) possèdent une masse volumique d'au moins 1,0 g/cm³.

5. Remplissage de gazon artificiel (602) selon l'une quelconque des revendications précédentes, dans lequel les fibres naturelles (105) sont au moins partiellement incorporées dans les granulés (101) du remplissage de gazon artificiel.

6. Remplissage de gazon artificiel (602) selon l'une quelconque des revendications précédentes, dans lequel l'huile comprend un ester insaturé, en particulier un ester synthétique insaturé.

7. Remplissage de gazon artificiel (602) selon l'une quelconque des revendications précédentes, dans lequel l'huile est fabriquée à partir de ressources renouvelables.

8. Remplissage de gazon artificiel (602) selon l'une quelconque des revendications précédentes, dans lequel la matière de charge possède une masse volumique d'au moins 2,0 g/cm³ et comprend l'un quelconque des sels suivants : du sulfate de baryum, du carbonate de calcium, du kaolin, du talc, de l'aluminosilicate, et des combinaisons de ceux-ci.

9. Remplissage de gazon artificiel (602) selon l'une quelconque des revendications précédentes, dans lequel le pigment est un pigment inorganique, étant choisi dans le groupe constitué de l'oxyde de fer, de l'oxyde de chrome, de l'oxyde de titane et de combinaisons de ceux-ci.

10. Remplissage de gazon artificiel (602) selon l'une quelconque des revendications précédentes, dans lequel le lubrifiant est choisi dans le groupe constitué de l'acide stéarique, de la glycérine sodée, de la glycérine et de combinaisons de ceux-ci.

11. Remplissage de gazon artificiel (602) selon la revendication 1, dans lequel
- le polymère compostable est un mélange de PLA et de PBS,
- la matière de charge est de la craie,
- l'huile comprend un ester synthétique insaturé, l'huile composant de 1 % à 5 % en poids du remplissage de gazon artificiel,
- les fibres naturelles sont des fibres de chanvre,
- les pigments sont choisis dans le groupe constitué de l'oxyde de fer, de l'oxyde de chrome, de l'oxyde de titane et de combinaisons de ceux-ci, et
- le lubrifiant est l'acide stéarique.

12. Remplissage de gazon artificiel (602) selon l'une quelconque des revendications précédentes, dans lequel le diamètre des granulés de remplissage de gazon artificiel est entre l'une quelconque des dimensions : de 0,1 mm à 3,5 mm, de 0,3 mm à 3,0 mm, et de 0,5 mm à 2,5 mm.

13. Remplissage de gazon artificiel (602) selon l'une quelconque des revendications précédentes, dans lequel une longueur des fibres naturelles est entre l'une quelconque des dimensions : de 0,05 mm à 4,5 mm, de 0,1 mm à 3,5 mm, de 0,2 mm à 3,5 mm et de 0,2 mm à 2,5 mm.

14. Procédé de fabrication d'un remplissage de gazon artificiel (602), le procédé comprenant :
- le mélange (702) de composants multiples pour former un mélange de base, le mélange de base étant constitué
∘ de 25 % à 50 % en poids d'un polymère compostable, en particulier, entre 34 % et 46 %, le polymère compostable étant choisi dans le groupe constitué de l'acide poly lactique (PLA), d'un élastomère co-polyester thermoplastique (TPC), de poly butylène succinate (PBS), de poly (3-hydroxy butyrate-co-3-hydroxy valérate) (PHBV), de poly hydroxy butyrate (PHB), de poly hydroxy alcanoate (PHA), d'un dérivé de ceux-ci ou d'un mélange de ceux-ci ;
∘ de 30 % à 50 % en poids d'une matière de charge, en particulier entre 40 % et 49,7 % ;
∘ de 1 % à 9 % en poids d'huile, en particulier entre 2,5 % et 8 % ;
∘ de 2 % à 30 % en poids de fibres naturelles, en particulier entre 7 % et 18% ;
∘ de 0,5 % à 2,5 % en poids de pigments, en particulier entre 0,8 % et 1,3 % ; et
∘ de 0,1 % à 0,5 % en poids de lubrifiant, en particulier entre 0,2 % et 0,3 % ;
- le chauffage (704) du mélange de base afin de former une masse à mouler comprenant les composants multiples ; et
- le façonnage (706) du mélange de base en une forme solide pour donner du remplissage de gazon artificiel.

15. Procédé selon la revendication 14, dans lequel les fibres naturelles sont des fibres de chanvre.

16. Procédé selon l'une quelconque des revendications 14 à 15, dans lequel le façonnage comprend une pelletisation du mélange de base chauffé.

17. Procédé selon l'une quelconque des revendications 14 à 16, dans lequel le façonnage comprend en outre la granulation de la forme solide.

18. Gazon artificiel (600), le gazon artificiel comprenant :
- un tapis de gazon artificiel (500), le tapis de gazon artificiel comprenant des touffes de fibres de gazon artificiel (504) multiples ; et
- du remplissage de gazon artificiel (602) selon l'une quelconque des revendications 1 à 13 précédentes, le remplissage de gazon artificiel étant étalé entre les multiples touffes de fibres artificielles.

19. Procédé d'installation d'un gazon artificiel, le procédé comprenant :
- l'installation (800) d'un tapis de gazon artificiel (500), le tapis de gazon artificiel comprenant des multiples touffes de fibres de gazon artificiel (504) ; et
- la mise en place (802) du gazon artificiel (600) en étalant une couche de remplissage de gazon artificiel (602) selon l'une quelconque des revendications 1 à 13 entre les multiples touffes de fibres de gazon artificiel (504).

20. Utilisation du remplissage de gazon artificiel (602) selon l'une quelconque des revendications 1 à 13 en tant que remplissage pour un tapis de gazon artificiel.

21. Utilisation d'un granulé en tant que remplissage de gazon artificiel pour un tapis de gazon artificiel, le granulé étant constitué
- de 25 % à 50 % en poids d'un polymère compostable, en particulier, entre 34 % et 46 %, le polymère compostable étant choisi dans le groupe constitué de l'acide poly lactique (PLA), d'un élastomère co-polyester thermoplastique (TPC), de poly butylène succinate (PBS), de poly (3-hydroxy butyrate-co-3-hydroxy valérate) (PHBV), de poly hydroxy butyrate (PHB), de poly hydroxy alcanoate (PHA), d'un dérivé de ceux-ci ou d'un mélange de ceux-ci ;
- de 30 % à 50 % en poids d'une matière de charge, en particulier entre 40 % et 49,7 % ;
- de 1 % à 9 % en poids d'huile, en particulier entre 2,5 % et 8 % ;
- de 2 % à 30 % en poids de fibres naturelles, en particulier entre 7 % et 18 % ;
- de 0,5 % à 2,5 % en poids de pigments, en particulier entre 0,8 % et 1,3 % ; et
- de 0,1 % à 0,5 % en poids de lubrifiant, en particulier entre 0,2 % et 0,3 %.
